# EUROPÄISCHE PATENTSCHRIFT

(11) **EP 3 939 884 B1**
(45) Veröffentlichungstag und Bekanntmachung des Hinweises auf die Patenterteilung: **17.08.2022**
(21) Anmeldenummer: 21184558.1
(22) Anmeldetag: 08.07.2021
(51) Int. Cl.: B64D 11/00

(54) **ERMITTLUNG DES BELADUNGSZUSTANDES EINES STAURAUMES AUF BASIS EINES AKUSTISCHEN RESONANZVERHALTENS**
DETERMINATION OF THE LOADING CONDITION OF A STORAGE AREA BASED ON ACOUSTIC RESONANCE BEHAVIOUR
DÉTERMINATION DE L'ÉTAT DE CHARGEMENT D'UN ESPACE DE STOCKAGE EN FONCTION DU COMPORTEMENT DE RÉSONANCE ACOUSTIQUE

(30) Priorität: 16.07.2020 DE 102020208882
(43) Veröffentlichungstag der Anmeldung: 19.01.2022
(73) Patentinhaber: Diehl Aviation Laupheim GmbH, 88471 Laupheim (DE); Diehl Aviation Gilching GmbH, 82205 Gilching (DE)
(72) Erfinder: Hopfe, Karl Albrecht, 01099 Dresden (DE); Rehmann, Alexander, 88477 Großschafhausen (DE); Berkenhoff, Johannes, 88400 Biberach an der Riß (DE)
(74) Vertreter: Diehl Patentabteilung

(56) Entgegenhaltungen:
- EP-A1- 3 098 163
- US-A1- 2017 230 620
- US-A1- 2017 283 086
- US-A1- 2019 233 113

## Beschreibung

Die Erfindung betrifft ein Staufach für ein Flugzeug und den Beladungszustand des Stauraumes des Staufaches mit Objekten.

In Passagierflugzeugen sind über den Sitzreihen für die Passagiere üblicherweise Staufächer in Form von Gepäckfächern angeordnet, um Objekte, z.B. in Form von Gepäck der Passagiere, aufzunehmen. Es sind verschiedene Systeme zur Ermittlung bzw. Überwachung eines Belegungsgrades /-zustandes von Gepäckfächern bzw. Stauräumen bekannt. Beispielsweise können Kameras, wie z.B. TOF-Kameras (TOF: time of flight), eingesetzt werden, um den Stauraum des Gepäckfachs zu erfassen. Beispielsweise können mittels derartiger Systeme die Gepäckfächer überwacht bzw. angesteuert werden, um beispielsweise einen verfügbaren Stauraum in den Gepäckfächern zu ermitteln.

Beispielsweise offenbart die Druckschrift US 2019233113 A1 ein System zur Verwaltung eines Stauraums von Überkopfbehältern in einem Fahrzeug, wobei das System einen Satz von Sensoren aufweist, welche zum Aufzeichnen von Daten und Übertragung von Informationen bezüglich eines Überkopfstaufachs ausgebildet sind, wobei der Satz an Sensoren mindestens eine Kamera und eine Abstandsmesseinrichtung umfasst. Ferner weist das System einen Dongle auf, welcher ausgebildet ist die Informationen zu empfangen und die empfangenen Informationen mit gespeicherten Datenpunkten zu vergleichen, die zuvor gemessen wurden, als bekannt war, dass der Platz im Gepäckfach leer war, und dass er eine Form und ein Volumen des verbleibenden Platzes im Gepäckfach bestimmt, indem er eine Differenz zwischen den empfangenen Informationen und den gespeicherten Datenpunkten berechnet. Der Dongle ist ausgebildet, einen Status des Überkopfbehälters auf Grundlage der Form und des Volumens des verbleibenden Überkopfbehälterraums zu melden, wobei der Status einen leeren Zustand, einen teilweise gefüllten Zustand und/oder einen vollen Zustand umfasst. US 2017/283086 A1 beschreibt eine Staufachanordnung für ein Flugzeug.

Es ist Aufgabe der Erfindung, Verbesserungen in Bezug auf die Ermittlung eines Beladungszustandes eines Stauraumes eines Staufaches mit Objekten vorzuschlagen.

Die Aufgabe wird durch eine Staufachanordnung mit den Merkmalen des Anspruchs 1, ein Flugzeug mit den Merkmalen des Anspruchs 11 sowie durch ein Verfahren mit den Merkmalen des Anspruchs 12 gelöst. Bevorzugte oder vorteilhafte Ausführungsformen der Erfindung ergeben sich aus den Unteransprüchen, der nachfolgenden Beschreibung sowie den beigefügten Figuren.

Gegenstand der Erfindung ist eine Staufachanordnung, welche für ein Flugzeug ausgebildet und/oder geeignet ist. Die Staufachanordnung weist mindestens ein, insbesondere mehrere Staufächer auf. Vorzugsweise ist das Staufach als ein Überkopfgepäckfach, auch als sogenanntes "Overhead Stowage Compartment (OHSC)" bekannt, ausgebildet. Im Speziellen kann das Staufach als ein starres Staufach, auch als sogenannter "fixed bin" bekannt, oder als ein schwenkbares Staufach, auch als sogenannter "movable bin" bekannt, ausgebildet sein. Alternativ kann das Staufach jedoch auch als jedes andere beliebige Fach zur Verstauung von Gegenständen in einem Flugzeug, wie z.B. ein sogenanntes "doghouse", ausgebildet sein. Das Staufach weist einen Stauraum auf, welcher zur Aufnahme von Objekten, beispielsweise Gepäckstücken, ausgebildet und/oder geeignet ist. Der Stauraum ist ein abgegrenzter und (in einer Schließstellung des Staufaches) abgeschlossener Raum, in welchem die Objekte während eines Fluges untergebracht sind. Die Beladung / Entladung von Objekten erfolgt in einer Offenstellung des Staufaches. Das Staufach kann genau einen Stauraum aufweisen. Alternativ kann das Staufach jedoch auch mindestens einen, insbesondere mehrere voneinander abgetrennte Stauräume aufweisen. Jeder der Stauräume bildet dann in der Schließstellung einen abgeschlossenen Raum. Diese geschlossenen Räume weisen jeweils ein akustisches Resonanzverhalten auf.

Die Staufachanordnung weist ein Überwachungssystem auf, welches zur Ermittlung bzw. Überwachung eines Beladungszustandes des Stauraums ausgebildet ist. Insbesondere hat das Überwachungssystem die Funktion, freie Stauplätze (verfügbarer Platz für Objekte) bei einem Boardingprozess und/oder liegengebliebene Objekte im Stauraum bei einem Deboardingprozess zu erkennen. Das Überwachungssystem weist hierzu eine Sensoreinrichtung und eine Auswerteeinrichtung auf, wobei die Auswerteeinrichtung zur Auswertung der von der Sensoreinrichtung gelieferten Sensordaten ausgebildet ist. Vorzugsweise ist jedem der Stauräume jeweils eine separate Sensoreinrichtung zugeordnet. Die Sensoreinrichtung und die Auswerteeinrichtung sind zur Übertragung der, von der Sensoreinrichtung gelieferten, Sensordaten datentechnisch, insbesondere kabelgebunden oder kabellos, z.B. via Funk, miteinander verbunden.

Das Staufach weist zumindest in der Schließstellung ein von einem Beladungszustand mit Objekten abhängiges akustisches Resonanzverhalten auf. Das heißt, dass ein in das Staufach eingestrahltes und/oder innerhalb des Staufaches erzeugtes akustisches Signal, das z.B. ursprünglich ein Frequenzspektrum konstanter Amplitude aufweist, durch das Resonanzverhalten frequenzselektiv Amplitudenänderungen / Phasenänderungen usw. erfährt. Das Resonanzverhalten stellt also insbesondere eine akustische Übertragungsfunktion (Amplitudenverstärkung / Phasenänderung über der Frequenz) des Staufaches / Stauraumes für ein akustisches Signal dar.

Die Erfindung beruht auf der Überlegung, dass sich das Resonanzverhalten des Staufachs ändert, wenn verschiedene Objekte eingelegt oder entnommen werden. Unter "Resonanzverhalten" wird vorliegend also auch eine spektrale akustische Übertragungsfunktion des Staufachs verstanden. Ein in das Staufach eingestrahltes akustisches Signal wird durch die Übertragungsfunktion ggf. verändert, so dass sich im Staufach das veränderte akustische Signal einstellt. Hierbei treten insbesondere Frequenzverschiebungen, Amplitudenänderung oder Phasenänderungen im akustischen Spektrum des akustischen Signals auf, die damit typisch für bestimmte Beladungszustände und Arten von Objekten sind, die sich in dem Stauraum befinden. Insbesondere wird zunächst eine Referenz-Übertragungsfunktion des Staufachs bei bekanntem Beladungszustand (insbesondere "leer") ermittelt. Wird dann zu einem anderen Zeitpunkt wieder eine Übertragungsfunktion bzw. ein akustisches Spektrum des sich im Staufach einstellenden akustischen Signals bestimmt, kann aus Änderungen in der Übertragungsfunktion / dem Spektrum gegenüber der Referenz auf die Änderung im Beladungszustand geschlossen werden. Zur Ermittlung der Änderungen wird insbesondere die Referenz-Übertragungsfunktion mit der aktuellen Übertragungsfunktion, die sich bei einem aktuellen Beladungszustand des Staufachs ergibt, verglichen. Die Kriterien für die Ermittlung des Beladungszustandes aus dem Resonanzverhalten / Spektrum sind stark abhängig von Geometrie / Material / Temperatur / Luftfeuchtigkeit im und in der Umgebung des Staufaches. Daher müssen diese Kriterien in der Regel durch eine Kombination von Experimenten / Versuchen / theoretischen Überlegungen / Empirik / Simulationen jeweils herausgefunden werden. Je ausgeklügelter die Kriterien sind, desto genauer kann dann ein jeweiliger Beladungszustand ermittelt werden. Beispiele: Als einfache Lösungen für Beladungszustände sind denkbar: "leer" oder "nicht leer" / "leer" oder "teilweise gefüllt" oder "voll", komplexere Lösungen sind: "voll zu X %" / "Beladung: X Trolleys und Y Kleidungsstücke" / "X Liter Stauraum verfügbar" / "Verbleibender Platz für X Trolleys oder Y Kleidungsstücke" usw.

Das Staufach bildet also einen durch ein akustisches Signal anregbaren Resonator. Insbesondere bildet das Staufach in der Schließstellung einen geschlossenen akustischen Resonator. Vorzugsweise ist der Resonator durch Schallwellen als die akustischen Signale anregbar. Die Sensoreinrichtung weist mindestens einen, insbesondere eine Mehrzahl akustischer Sensoren auf, welche zur Erfassung und/oder Miterfassung des akustischen Signals innerhalb des Stauraums ausgebildet sind. Insbesondere ist der akustische Sensor in eine Wandung des Staufachs bzw. Stauraumes integriert und/oder zumindest teilweise innerhalb des Stauraums angeordnet. Die Sensoreinrichtung ist dazu ausgebildet, Sensordaten auszugeben, die zu dem akustischen Signal korreliert sind. Insbesondere wird das akustische Signal in Form einer elektrischen Schwingung als Sensordaten ausgegeben. Alternativ wird ein Frequenzspektrum bzw. Spektralwerte des akustischen Signals ausgegeben usw.

Die Auswerteeinrichtung ist ausgebildet, das aktuelle Resonanzverhalten, insbesondere in Form eines Frequenzspektrums des aufgenommenen Signals, des Staufaches anhand der Sensordaten zu ermitteln. Weiterhin ist sie dazu ausgebildet, den Beladungszustand des Stauraumes mit Objekten auf Basis des ermittelten Resonanzverhaltens zu ermitteln.

Das Staufach als akustischer Resonator wird also insbesondere durch die Einstrahlung eines akustischen Signals in den Stauraum zum Schwingen angeregt, wobei das Staufach je nach Beladung mit Objekten, z.B. in einem leeren Beladungszustand ein erstes charakteristisches, bauartbedingtes Resonanzverhalten aufweist. Bei einer Anordnung von ein oder mehreren Objekten in dem Stauraum ändern sich die Resonatoreigenschaften, also das Resonanzverhalten, des Staufachs, sodass dies als eine Änderung des Resonanzverhaltens detektierbar ist. Vorzugsweise ist die Auswerteeinrichtung ausgebildet, unterschiedliche Beladungszustände anhand von unterschiedlichen Resonanzverhalten zu ermitteln. Das unterschiedliche Resonanzverhalten erzeugt also ein jeweiliges unterschiedliches akustisches "Ausgangssignal" (Signal, das sich im Stauraum einstellt) auf die Einstrahlung eines akustischen Eingangs- / Anregungssignals hin. Dies ist modellhaft zu verstehen, denn tatsächlich existiert ein einziges akustisches Signal im Stauraum, das sich aus dem aktuellen Resonanzverhalten und dem einstrahlenden Eingangssignal ergibt. Das Staufach als Resonator stellt also ein System dar, wobei das Ausgangssignal, also das im Staufach vorherrschende akustische Signal, die Systemantwort zu dem Eingangssignal bildet. Das System wird durch den Beladungszustand mit Objekten verändert, so dass die Systemantwort und damit das Ausgangssignal ebenfalls mitverändert wird. Im Speziellen ist die Auswerteeinrichtung ausgebildet, den Beladungszustand basierend auf einer Analyse von Raummoden in dem Resonator zu ermitteln. Insbesondere kann durch die Betrachtung des modalen Verhaltens des Staufachs auf den Beladungszustand des Stauraums zurückgeschlossen werden.

Es wird somit ein Überwachungssystem vorgeschlagen, welches eine Information bezüglich des Beladungszustands anhand der Resonanz bzw. des aktuellen akustischen Resonanzverhaltens ermöglicht. Der Vorteil der Erfindung besteht insbesondere darin, dass der Beladungszustand des Staufachs mithilfe von akustischen Kenngrößen in einfacher Weise dargestellt werden kann. Insbesondere kann unter Ausnutzung der Raumakustik eine effiziente Erkennung von Objekten in dem Stauraum bzw. eine Ermittlung des Beladungszustandes des Staufachs umgesetzt werden. Durch die akustische Detektion des Beladungszustands wird zudem eine Sensoreinrichtung vorgeschlagen, welche sich durch eine geringe Anzahl an Sensorkomponenten auszeichnet. Somit kann ein bauteilreduziertes und kostengünstiges Überwachungssystem geschaffen werden.

In einer konkreten Ausgestaltung ist vorgesehen, dass die Auswerteeinrichtung ausgebildet ist, auf Basis des aktuellen Resonanzverhaltens ein verfügbares Stauraumvolumen des Stauraumes zu ermitteln. Alternativ oder optional ergänzend ist die Auswerteeinrichtung ausgebildet, auf Basis des Resonanzverhaltens ein oder mehrere in dem Stauraum angeordnete Objekte zu detektieren. Vorzugweise ist die Auswerteeinrichtung ausgebildet, das Stauraumvolumen bzw. die Objekte auf Basis einer Phasen- und/oder Frequenz- und/oder Amplitudenänderung des erfassten Resonanzverhaltens (Spektrum) zu ermitteln. Alternativ oder optional ergänzend ist die Auswerteeinrichtung ausgebildet, basierend auf einer Änderung der Schwingungsbäuche und/oder der Schwingungsknoten im akustischen Signal auf das Resonanzverhalten und so auf ein oder mehrere Objekte und/oder freie Stauplätze in dem Stauraum zu schließen und/oder diese zu identifizieren. Optional kann in der Auswerteeinrichtung ein Akustikmodell hinterlegt sein, in welchem schalländernde, insbesondere schallabsorbierende, schallreflektierende, schallablenkende und/oder schallabschwächende Objekte erfasst sind, sodass auf Basis der Änderung des Resonanzverhaltens zwischen unterschiedlichen Objekten in dem Stauraum unterschieden werden kann. Somit kann durch eine Auswertung der Änderung des Resonanzverhaltens eine Beschaffenheit, z.B. Unterscheidung zwischen vergleichsweise harten (Trolleys) und weichen Objekten (Kleidung), bei der Ermittlung des Beladungszustands berücksichtigt werden.

In einer weiteren Ausgestaltung ist vorgesehen, dass wenigstens einer, insbesondere mehrere oder alle, der akustischen Sensoren als ein Mikrofon ausgebildet ist, wobei das Mikrofon zumindest teilweise in dem Stauraum angeordnet und/oder in den Stauraum gerichtet ist. Insbesondere ist das Mikrofon in eine Seitenplatte oder eine Deckenplatte des Staufachs integriert. Bevorzugt weist das Mikrofon eine Richtcharakteristik auf, welche vollständig oder zumindest größtenteils in den Stauraum gerichtet ist. Es wird somit ein akustischer Sensor vorgeschlagen, welcher sich durch eine kostengünstige Ausgestaltung auszeichnet. Zudem kann das Mikrofon bauraumsparend in das Staufach integriert werden.

Alternativ oder zusätzlich kann mindestens einer der akustischen Sensoren auch als ein Beschleunigungssensor ausgebildet sein, welcher zur Erfassung der akustischen Wellen des akustischen Signals ausgebildet ist. Der Beschleunigungssensor kann hierzu an dem Staufach und/oder in dem Stauraum angeordnet sein. Im Speziellen ist der Beschleunigungssensor als ein piezoelektrischer Beschleunigungssensor ausgebildet, um basierend auf einer durch die akustische Welle ausgelösten Druckschwankung ein elektrisches Signal zu erzeugen.

In einer Weiterbildung ist vorgesehen, dass die Sensoreinrichtung mehrere der als Mikrofone oder alternativ der als Beschleunigungssensoren ausgebildeten akustischen Sensoren zur Erfassung der akustischen Signale an mehreren verschiedenen Orten des Stauraums aufweist. Insbesondere sind die mehreren akustischen Sensoren in dem Stauraum räumlich gleichmäßig verteilt und/oder beabstandet voneinander angeordnet. Insbesondere sind die mehreren akustischen Sensoren datentechnisch mit der Auswerteeinrichtung verbunden, wobei die Auswerteeinrichtung ausgebildet ist, die erfassten Sensordaten der mehreren akustischen Sensoren auszuwerten und miteinander zu korrelieren. Es wird somit ein Überwachungssystem vorgeschlagen, welches sich durch eine besonders genaue und robuste Sensorik auszeichnet.

In einer ersten möglichen Umsetzung ist vorgesehen, dass Umgebungsschall in den Stauraum einstrahlt, um das akustische Signal im Stauraum zu bilden bzw. zu erzeugen. Insbesondere erfolgt keinerlei gezielte Einstrahlung von sonstigem Anregungsschall in den Stauraum. Das Ermittlungsverfahren für den Beladungszustand wird also in diesem Sinne "passiv" unter Ausnutzung der Einstrahlung von ohnehin vorhandenem Umgebungsschall durchgeführt. Der Umgebungsschall dient dabei zur Anregung des Staufaches bzw. Stauraumes als Schallkörper. Insbesondere kann ein bestimmter Umgebungsschall durch ein in der Auswerteeinrichtung hinterlegtes Schallmuster charakterisiert sein, sodass eine Anregung durch den Umgebungsschall durch die Auswerteeinrichtung erkannt wird, wenn das Schallmuster erkannt wird. Insbesondere ist bzw. enthält der Umgebungsschall ein bekanntes, charakteristisches Schallmuster, z.B. das Schließgeräusch des Staufaches, dessen Beladungszustand erfasst werden soll oder ein Betriebsgeräusch eines Gerätes im Flugzeug, z.B. einer Lüftungsanlage, einer Turbine, Motor, usw. Beispielsweise kann der Umgebungsschall bzw. ein für die Ermittlung des Beladungszustandes relevanter Anteil des Umgebungsschalls also durch ein Schließgeräusch beim Schließen des Staufachs und/oder ein Betriebsgeräusch einer Belüftung / Klimaanlage / Turbine / Motor erzeugt werden. Es wird somit ein passives Überwachungssystem vorgeschlagen, welches sich durch eine besonders einfache und kostengünstige Ausstattung auszeichnet.

In einer alternativen oder optional ergänzenden Umsetzung ist vorgesehen, dass die Staufachanordnung eine Anregungseinrichtung zur Wiedergabe oder auch Erzeugung eines Anregungsschalls aufweist. Der (durch die Resonanz im Ergebnis veränderte) Anregungsschall bildet dann zumindest einen Teil des akustischen Signals im Stauraum. Im Gegensatz zur obigen "passiven" Lösung erfolgt hier also eine gezielte Einstrahlung von Anregungsschall, um das akustische Signal im Staufach - zumindest einen Teil davon, der Rest stammt z.B. aus Umgebungsschall - zu erzeugen. Bevorzugt ist die Anregungseinrichtung durch ein oder mehrere Lautsprecher gebildet. Alternativ kann die Anregungseinrichtung jedoch auch durch eine Schwingspule, auch als "Exciter" bekannt, ausgebildet sein, welche das akustische Signal als eine Schwingung auf das Staufach abstrahlt. Die Anregungseinrichtung kann in das Staufach integriert oder zumindest in unmittelbarer Nähe des Staufachs angeordnet sein. Beispielsweise kann der Lautsprecher in eine Passagier-Serviceeinheit des Flugzeugs, auch als "Passenger Service Unit" (PSU) bekannt, integriert sein. Der Lautsprecher ist vorzugsweise ein standardmäßig, also bereits im Flugzeug ohnehin, verbauter Lautsprecher, welcher zur Wiedergabe von Durchsagen, Sicherheitshinweisen, etc. ausgebildet ist und für das Ermittlungsverfahren des Beladungszustandes zusätzlich in dieser Hinsicht zweckentfremdet wird bzw. eine zusätzliche bzw. Doppelfunktionalität erhält. Beispielweise kann der durch die Anregungseinrichtung wiedergegebene Anregungsschall durch ein aktiv erzeugtes Geräusch, Ton etc. gebildet werden. Der akustische Sensor ist ausgebildet, das (sich einstellende) akustische Signal aufzunehmen und zur Ermittlung des Beladungszustandes in Form der Sensordaten an die Auswerteeinrichtung weiterzugeben. Vorzugsweise ist der Auswerteeinrichtung der von der Anregungseinrichtung wiedergegebene Anregungsschall bzw. dessen Charakteristik (z.B. Frequenzspektrum, Amplitude, Zeitverlauf, Tonfolge, ...) bekannt und/oder in der Auswerteinrichtung hinterlegt. Es wird somit eine "aktive" Sensoreinrichtung vorgeschlagen, welche sich unabhängig von der Umgebung durch eine genaue Ermittlung des Beladungszustandes auszeichnet.

In einer weiteren Realisierung ist vorgesehen, dass die Auswerteeinrichtung zum Aussenden eines Steuersignals an die Anregungseinrichtung übertragungstechnisch mit der Anregungseinrichtung verbunden ist. Insbesondere kann die Anregungseinrichtung auf Basis des Steuersignals durch die Auswerteeinrichtung angesteuert werden, um einen der Auswerteeinrichtung bekannten Anregungsschall wiederzugeben. Alternativ oder optional ergänzend ist die Auswerteeinrichtung zum Empfangen einer Wiedergabeinformation von der Anregungseinrichtung übertragungstechnisch mit der Anregungseinrichtung verbunden. Insbesondere umfasst die Wiedergabeinformation eine Information über den wiedergegebenen Anregungsschall bzw. dessen Charakteristik, anhand welcher der Anregungsschall eindeutig identifizierbar ist. Insbesondere kann so ein bekannter Anteil (Anteil, erzeugt durch den Anregungsschall) im akustischen Signal von z.B. (sich ergebendem Signal aus) unbekannten Umgebungsgeräuschen unterschieden werden. Somit kann basierend auf dem bekannten Anteil des Anregungsschalls in dem sich im Staufach einstellenden akustischen Signal das Resonanzverhalten und damit ein Beladungszustand durch die Sensoreinrichtung besonders zuverlässig ermittelt werden.

Optional kann die Anregungseinrichtung zur aktiven Lärmkompensation, auch als "Active Noise Cancellation" bekannt, ausgebildet sein. Hierzu kann ein zu unterdrückender Umgebungsschall durch den akustischen Sensor aufgenommen werden und durch die Anregungseinrichtung ein Schall mit entgegengesetzter Polarität, auch "Antischall" genannt, wiedergegeben werden, um den zu unterdrückender Umgebungsschall mittels destruktiver Interferenz auszulöschen.

In einer weiteren Konkretisierung ist vorgesehen, dass die Anregungseinrichtung ausgebildet ist, zumindest einen Teil oder den gesamten Anregungsschall im Hörfrequenzbereich auszugeben bzw. in den Stauraum einzustrahlen. Insbesondere liegt der Anregungsschall in einem Frequenzbereich zwischen 75 Hz und 1000 Hz, vorzugsweise zwischen 300 Hz und 850 Hz. Da die Anregungsfrequenz im hörbaren Bereich liegt, ist optional ein intensives Sounddesign möglich oder sogar empfehlenswert bzw. nötig. Beispielsweise kann ein geeigneter Umgebungs- oder Anregungsschall durch einen hörbaren Alarmton, einen Klingelton oder dergleichen gebildet werden. Alternativ kann jedoch auch das Schließgeräusch des Staufaches als Anregungsschall dienen. Hierzu kann ein Schließmechanismus des Staufachs ausgebildet sein, ein Schließgeräusch zu erzeugen, welches zur Auswertung durch die Auswerteeinrichtung geeignet und/oder optimiert ist. Beispielsweise kann der Schließmechanismus hierzu ein intensives "Klick"-Geräusch erzeugen.

In einer weiteren Konkretisierung ist vorgesehen, dass die Auswerteinrichtung ein Kl-Modul aufweist, welches ausgebildet ist, die Ermittlung des Beladungszustandes des Stauraums basierend auf dem erfassten akustischen Signal und/oder dem ermittelten Resonanzverhalten zu erlernen und/oder zu verbessern. Das KI-Modul ist ausgebildet, auf Basis des aktuell erfassten akustischen Signals und/oder des ermittelten Resonanzverhaltens einen aktuellen Beladungszustand des Staufachs, insbesondere in Abhängigkeit der Beschaffenheit der einzelnen Objekte, zu bestimmen. Vorzugsweise ist das KI-Modul ausgebildet, die Sensordaten mittels eines neuronalen Netzes zu verarbeiten und auszuwerten. Optional ist das KI-Modul ausgebildet, auf Basis der Sensordaten die Ermittlung einer Verteilung der Objekte in dem Stauraum zu erlernen und/oder eine derartige Ermittlung zu verbessern. Somit kann der Boarding- bzw. Deboardingprozess verbessert bzw. beschleunigt werden.

In einer weiteren konkreten Umsetzung ist vorgesehen, dass das Überwachungssystem eine Anzeigeeinrichtung aufweist. Insbesondere kann die Anzeigeeinrichtung durch ein mobiles Endgerät oder eine in dem Flugzeug installierte Anzeige, z.B. ein Display, gebildet sein. Die Anzeigeeinrichtung ist datentechnisch mit der Auswerteeinrichtung verbunden, wobei die Auswerteeinrichtung ausgebildet ist, die Anzeigeeinrichtung in Abhängigkeit des Beladungszustandes anzusteuern. Die Anzeigeeinrichtung ist ausgebildet, den aktuellen Beladungszustand des Staufachs - insbesondere bei einem Boardingprozess und/oder bei einem Deboardingprozess - anzuzeigen. Bevorzugt ist die Anzeigeeinrichtung ausgebildet, die Anzahl der freien Stauraumplätze und/oder einen leeren bzw. vollen Beladungszustand der einzelnen Staufächer anzuzeigen. Es wird somit ein Überwachungssystem vorgeschlagen, welches sich durch eine genaue Anzeige des aktuellen Beladungszustands auszeichnet.

Ein weiterer Gegenstand der Erfindung betrifft ein Flugzeug mit der Staufachanordnung, wie diese bereits zuvor beschrieben wurde. Insbesondere ist das Flugzeug als ein Passagierflugzeug ausgebildet. Das Flugzeug weist hierzu eine Passagierkabine auf, wobei die Staufachanordnung in der Passagierkabine angeordnet ist. Vorzugsweise ist die Staufachanordnung in einem Überkopfbereich der Passagierkabine angeordnet. Insbesondere weist die Staufachanordnung mehrere der Staufächer auf, wobei die mehreren Staufächer in Flugzeuglängsrichtung hintereinander angeordnet eine oder mehrere Reihen an Staufächern bilden. Bevorzugt weist das Flugzeug je Sitzreihe jeweils eine Reihe an Staufächern auf. Bevorzugt ist jedem Staufach jeweils eine separate Sensoreinrichtung zugeordnet, sodass der Beladungszustand der einzelnen Staufächer unabhängig voneinander erfassbar ist. Alternativ kann die Staufachanordnung jedoch auch in einem Boden- oder Wandbereich der Passagierkabine angeordnet sein.

Ein weiterer Gegenstand der Erfindung ist ein Verfahren zur Ermittlung des Beladungszustandes der Staufachanordnung, wie dieses bereits zuvor im Zusammenhang mit der Staufachanordnung sinngemäß beschrieben wurde, mit den folgenden Schritten. Das Verfahren geht dabei vom Vorliegen eines akustischen Signals im Stauraum aus:
- das akustische Signal in dem Stauraum wird erfasst und die mit diesem korrelierten Sensordaten werden an die Auswerteeinrichtung übermittelt,
- das aktuelle Resonanzverhalten wird anhand der Sensordaten ermittelt,
- der Beladungszustand wird auf Basis des ermittelten Resonanzverhaltens ermittelt.

Prinzipiell kann - wie oben erläutert - das akustische Signal passiv durch einen Umgebungsschall, insbesondere das Schließgeräusch des Staufachs, erzeugt werden. Das akustische Signal (zumindest ein Anteil dessen) wird dabei vorzugsweise beim Schließen und/oder im Schließzustand des Staufachs durch den akustischen Sensor, insbesondere das mindestens eine Mikrofon oder den mindestens einen Beschleunigungssensor, aufgenommen. Alternativ oder zusätzlich kann das akustische Signal (zumindest ein Anteil dessen) aktiv durch die oben genannte Anregungseinrichtung, insbesondere den Lautsprecher oder die Schwingspule, erzeugt werden. Hierzu kann die Anregungseinrichtung beispielsweise in festgelegten zeitlichen Abständen oder durch manuelles Auslösen den Anregungsschall wiedergeben. Alternativ kann die oben genannte Auswerteeinrichtung jedoch auch die Anregungseinrichtung ansteuern, um den Anregungsschall wiederzugeben.

In einer Ausführungsform wird davon ausgegangen, dass sich das Resonanzverhalten des Staufachs / Stauraums bei Anwesenheit mindestens eines Objektes in dem Stauraum ändert, wobei das Objekt basierend auf einer Änderung des Resonanzverhaltens erkannt und/oder identifiziert werden kann. Der Beladungszustand wird dann basierend auf einer Änderung des Resonanzverhaltens ausgehend von einem Stauraum mit bekanntem Resonanzverhalten, das sich aus einem bekanntem Beladungszustand ergibt, ermittelt. Es wird mit anderen Worten also ein "Referenz"-Resonanzverhalten ermittelt, das bei einem bekannten Beladungszustand (insbesondere leeres Staufach) vorherrscht. Aus Änderungen in einem Resonanzverhalten, das später ermittelt wird, wird dann auf den späteren Beladungszustand geschlossen. Z.B. kann aus einer geänderten Phaseninformation im Spektrum des akustischen Signals (im Vergleich zum Referenzspektrum bzw. dessen Referenzphase) auf eine Anwesenheit von dämpfenden Objekten wie Kleidungsstücken geschlossen werden. Aus einer Amplitudenänderung (aktuelle zu Referenzamplitude) auf reflektierende Objekte wie Trolleys etc. Je nach Art und Beschaffenheit des Objekts kann das Resonanzverhalten sich dahingehend ändern, dass das akustische Signal durch das Objekt verändert gedämpft und/oder reflektiert und/oder umgelenkt und/oder absorbiert wird. Somit kann neben der Erkennung von Objekten in dem Stauraum auch eine Identifizierung der Objekte erfolgen, um den Beladungszustand präzise bestimmen zu können.

In einer Konkretisierung ist vorgesehen, dass anhand einer Änderung im Amplituden- und/oder Frequenz- und/oder Phasenverhalten als Resonanzverhalten, insbesondere einer Phasenverschiebung, ermittelt wird, ob massive (also im Wesentlichen schallreflektierende) oder weiche (also im Wesentlichen schalldämpfende) Objekte in dem Stauraum vorhanden sind. Insbesondere wird erkannt, dass bei einer Amplitudenänderung und/oder Phasenänderung, insbesondere einer Phasenverschiebung, im Resonanzverhalten ein weiches Objekt in dem Stauraum vorhanden ist. Insbesondere sind weiche Objekte als kompressible Objekte und harte Objekte als nicht-kompressible bzw. weniger kompressible Objekte zu verstehen. Die weichen Objekte weisen insbesondere eine geringere Dichte als die harten Objekte auf. Insbesondere können somit Objekte mit unterschiedlicher Beschaffenheit erkannt werden. Durch die Anwesenheit von massiven ("harten") Objekten wird die Frequenz im Resonanzverhalten (Frequenzverschiebung im Spektrum) erhöht, da die freie Weglänge des Schalls innerhalb des Stauraums abnimmt. Durch die Anwesenheit von weichen Gegenständen wird die Amplitude im Resonanzverhalten gedämpft (Amplitudenänderung im Spektrum) und/oder eine Phase im Resonanzverhalten verschoben (Phasenverschiebung im Spektrum). Beispielsweise kann somit ein Gepäckstück von einem Kleidungsstück als Objekt unterschieden werden.

In einer weiteren Ausführungsform ist vorgesehen, dass bei der Ermittlung des Beladungszustandes zwischen einer Anordnung von massiven (harten) Objekten und weichen Objekten in dem Stauraum unterschieden wird. Insbesondere kann ein verfügbarer Stauraum in Abhängigkeit der Verteilung von massiven und weichen Objekten ermittelt werden. Bevorzugt kann durch eine Auswertung der verstauten Objekte der aktuelle Beladungszustand präzise angezeigt werden.

Weitere Merkmale, Wirkungen und Vorteile der Erfindung ergeben sich aus der nachfolgenden Beschreibung eines bevorzugten Ausführungsbeispiels der Erfindung sowie der beigefügten Figuren. Dabei zeigen:
- Figur 1: eine schematische Darstellung eines Flugzeugs mit einer Staufachanordnung,
- Figur 2: ein Ablaufdiagramm eines Verfahrens zur Ermittlung eines Beladungszustandes der Staufachanordnung aus Figur 1,
- Figur 3: einen beispielhaften Ablauf des Verfahrens aus Figur 2 anhand der Beladung des Staufaches aus Figur 1.

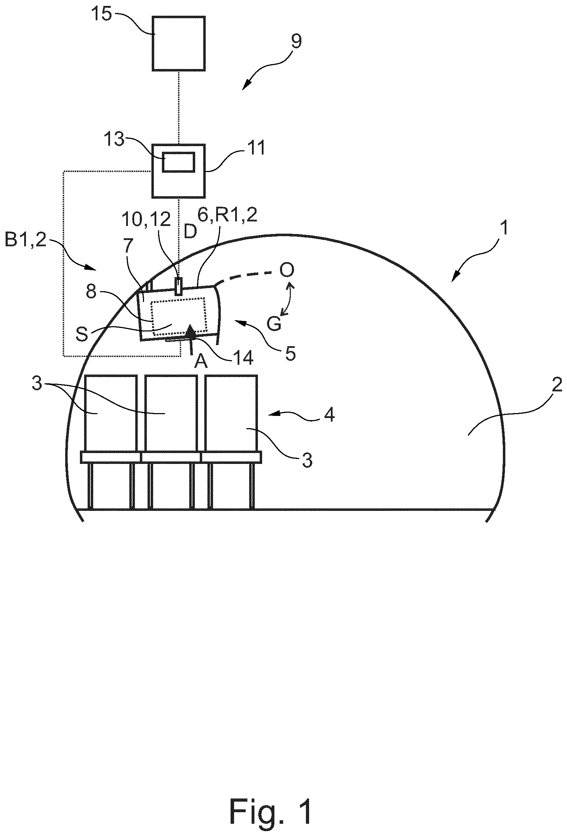

Figur 1 zeigt in einer stark schematisierten Ansicht einen Innenraum 2 eines Flugzeugs 1. Das Flugzeug 1 ist ein Passagierflugzeug, wobei der Innenraum 2 als eine Passagierkabine ausgebildet ist. In dem Innenraum 2 sind hierzu mehrere Sitzplätze 3 nebeneinander angeordnet, welche bezüglich der Flugzeuglängsrichtung eine von mehreren Sitzreihen 4 bilden. Aus Gründen der Übersichtlichkeit ist nur eine Sitzreihe 4 dargestellt, wobei die Sitzplätze 3 prinzipiell beliebig in unterschiedlichen Anordnungen und Sitzreihen gruppiert sein können.

Ferner ist in der Passagierkabine eine Staufachanordnung 5 angeordnet, welche mehrere in Flugrichtung hintereinander angeordnete Staufächer 6, auch als "Bins" bekannt, aufweist. Die Staufächer 6 weisen jeweils einen Stauraum 7 auf, welcher zur Aufnahme von Objekten 8, z.B. Gepäckstücke wie Handgepäckskoffer, Trolley, Kleidung, Rucksack, etc. dient (hier in Gesamtheit nur gestrichelt angedeutet). Jeder Sitzreihe 4 ist jeweils ein separates Staufach 5 zugeordnet. Jedem Sitzplatz 3 ist genau ein Stauraumabschnitt des Stauraums 7 zugeordnet. Die Staufächer 6 sind in einer Schließstellung G (einer nicht näher erläuterten Frontklappe) geschlossen, so dass sich ein abgeschlossener, d.h. vollständig von Wänden umgrenzter Stauraum 7 ergibt. In einer Offenstellung O ist die Frontklappe (gestrichelt dargestellt) und somit das Staufach geöffnet, sodass ein oder mehrere Objekte 8 in dem nun nach einer Seite offenen Stauraum 7 platziert oder entnommen werden können.

Das Flugzeug 1 weist ein Überwachungssystem 9 auf, wobei das Überwachungssystem 9 die Funktion hat, einen Beladungszustand B1,2 der Stauräume 7 der einzelnen Staufächer 6 zu ermitteln. Hierzu weist das Überwachungssystem 9 eine Sensoreinrichtung 10 auf, welche zur Erfassung eines im Stauraum 7 vorhandenen akustischen Signals S dient. Jedem der Staufächer 6 ist jeweils eine separate Sensoreinrichtung 10 zugeordnet.

Das Überwachungssystem 9 weist eine Auswerteeinrichtung 11 auf, wobei die Auswerteeinrichtung 11 zur Auswertung der von der Sensoreinrichtung 10 gelieferten Sensordaten D dient. Hierzu ist die Sensoreinrichtung 10 datentechnisch, hier über ein Datenkabel, mit der Auswerteeinrichtung 11 verbunden. Die Auswerteeinrichtung 11 ist als ein Datenverarbeitungsgerät ausgebildet.

Die Sensoreinrichtung 10 weist einen akustischen Sensor 12 auf, welcher hier teilweise in dem Stauraum 7 angeordnet und in diesen gerichtet ist. Der akustische Sensor 12 ist hier ein Mikrofon zum Aufnehmen des akustischen Signales S in Form von Schallwellen.

Geschlossene Räume wie hier das Staufach 6 in der Schließstellung G bzw. der sich ergebende Stauraum 7 haben stets charakteristische akustische Eigenschaften und ein je nach Beladung mit Objekten 8 ggf. unterschiedliches bestimmtes aktuelles Resonanzverhalten R1,2. Je glatter die Wände sind, umso deutlicher treten z.B. Resonanzen auf. Der Stauraum 7 ist ein solcher geschlossener Raum mit glatten Wänden und bildet in der Schließstellung G einen akustischen Resonator, welcher durch ein akustisches Signal angeregt werden kann. Dabei ergibt sich ein vom Resonanzverhalten R1,2 abhängiges akustisches Signal S innerhalb des Stauraums 7, das durch den akustischen Sensor 12 der Sensoreinrichtung 10 aufgenommen wird. Das Resonanzverhalten R1 ergibt sich hier bei einem leeren Stauraum 7, das Resonanzverhalten R2 bei Einliegen des Objekts 8. Damit ergeben sich auch zwei unterschiedliche akustische Signale S im Stauraum 7 je nach Beladungszustand B1 (leer) und B2 (mit Objekt 8).

In Abhängigkeit des Beladungszustandes B1,2 ändern sich also die Resonanzeigenschaften des Resonators in Form des Staufaches 6, sodass diese als eine Änderung des akustischen Signals S detektierbar sind. Die Auswerteeinrichtung 11 ist ausgebildet, die erfassten Änderungen des Resonanzverhaltens R1,2 auszuwerten und basierend auf der Änderung einen aktuellen Beladungszustand B1,2 für das Staufach 6 zu bestimmen. Dabei wird durch eine Betrachtung des modalen Verhaltens des Staufachs 6 festgestellt, wo sich Schwingungsknoten und/oder Schwingungsbäuche bei bestimmten Eigenfrequenzen ausbilden, welche sich wiederum durch unterschiedliche Beladungszustände B1,2 ändern. Somit kann der Beladungszustand B1,2 beispielsweise durch eine Auswertung der Schwingungsknoten bzw. Schwingungsbäuche präzise ermittelt und auch Objekte 8 mit unterschiedlicher Beschaffenheit erkannt werden. So kann z. B. eine Jacke von einem Koffer als jeweiliges Objekt 8 unterschieden werden.

Prinzipiell kann die Auswertung des akustischen Signals S mittels einer Parameterauswertung mit Entscheidungsbaum oder mittels eines KI-Moduls 13 erfolgen. Das KI-Modul 13 ist ausgebildet, die Ermittlung des Beladungszustands B1,2 auf Basis unterschiedlicher akustischer Signale S zu erlernen und/oder eine Ermittlung des Beladungszustands B1,2 zu verbessern.

Zur Anregung des Resonators in Form des Staufaches 6 kann in ersten Varianten ein ohnehin vorhandener Umgebungsschall, z.B. ein Klicken eines Schlosses beim Schließen des Staufaches 6 und/oder ein Klimaanlagengeräusch der nicht dargestellten Klimaanlage im Flugzeug 1 verwendet werden. In einer zweiten, hier konkret dargestellten, Variante wird eine externe Anregungseinrichtung 14, wie z.B. hier ein Lautsprecher, oder alternativ ein "Exciter", verwendet. Die Anregungseinrichtung 14 ist dabei signaltechnisch mit der Auswerteeinrichtung 11 verbunden. Die Auswerteeinrichtung 11 steuert die Anregungseinrichtung 14 zur Wiedergabe eines Anregungsschalls A an. Die Anregungseinrichtung 14 übermittelt außerdem eine Schallinformation bezüglich des wiedergegebenen Anregungsschalls A an die Auswerteeinrichtung 11. Somit sind der Auswerteeinrichtung 11 akustische Kenngrößen des Anregungsschalls A und damit auch Randbedingungen des akustischen Signals S bekannt, so dass der Beladungszustand B1,2 besonders genau ermittelt werden kann.

Der ermittelte Beladungszustand B1,2 kann somit einerseits nach dem Flug und Deboarding der Passagiere herangezogen werden, um zu überprüfen, ob alle Staufächer 6 leer sind (Ermittlung, nachdem alle Staufächer 6 leer sein sollten). Andererseits kann der Beladungszustand B1,2 vor dem Flug beim Boarding der Passagiere wiederholt ermittelt und jeweils herangezogen werden, um wiederholt zu überprüfen, wo noch freie Stauraumabschnitte der Stauräume 7 zur Verfügung stehen, damit Passagiere dort noch Gepäck in Form von Objekten 8 verstauen können. Somit kann der Boarding- bzw. Deboardingprozess beschleunigt werden. Des Weiteren ist vorgesehen, dass die Sensoreinrichtung 10 und die Anregungseinrichtung 14 für weitere Anwendungen wie z.B. Panelloudspeaker oder Active Noise Cancellation (ANC) verwendet werden.

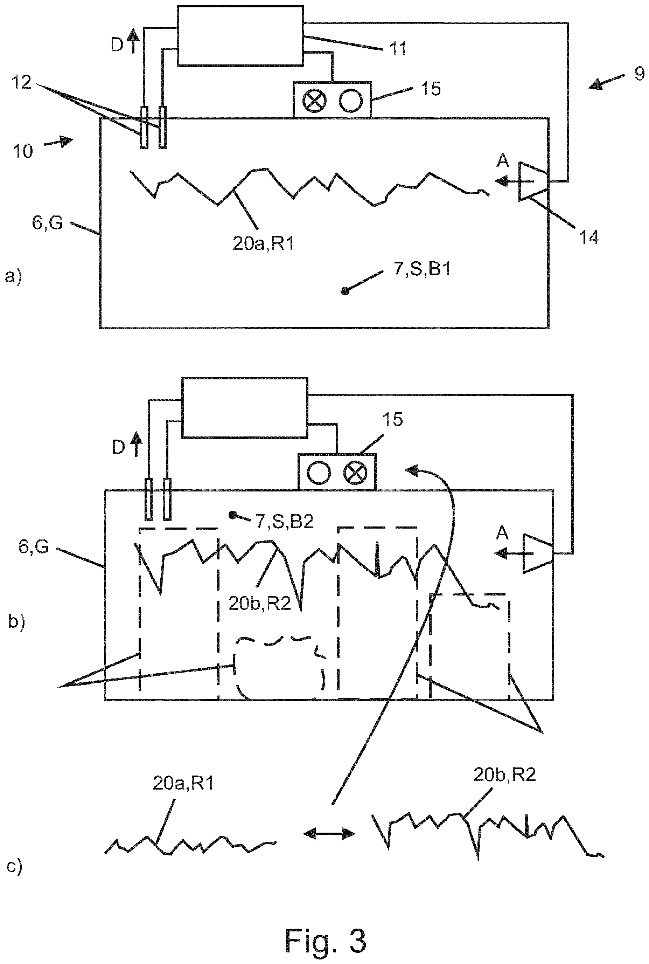

Das Überwachungssystem 10 enthält eine Anzeigeeinrichtung 15, welche zur Anzeige des jeweils aktuellen bzw. zuletzt ermittelten Beladungszustandes B1,2 ausgebildet ist. Beispielsweise kann die Anzeigeeinrichtung 15 durch ein mobiles Endgerät oder alternativ (siehe Figur 3) eine Anzeige, z.B. ein Display, in dem Innenraum 2 bzw. an den Staufächern 6 gebildet sein. Die Anzeigeeinrichtung 15 kann den aktuellen Beladungszustand B1,2 der einzelnen Stauräume 7 visualisieren. Die Anzeigeeinrichtung 15 zeigt neben der Anzeige des Beladungszustands B1,2 auch eine Anzahl von verfügbaren Stauraumabschnitten an. Somit kann der Beladungszustand B1,2 zur Verwaltung und/oder Zuordnung von freien Stauplätzen in Form der Stauraumabschnitte verwendet werden.

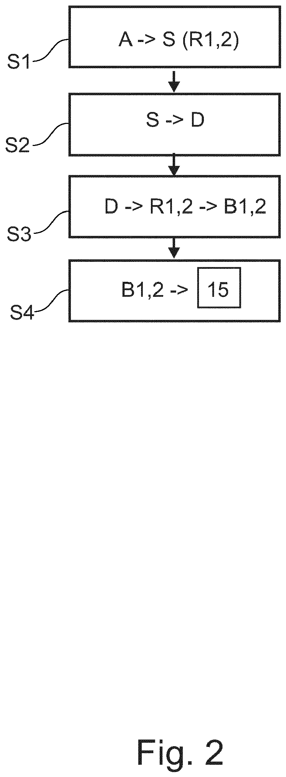

Figur 2 zeigt in einem schematischen Ablaufdiagramm ein Verfahren zur Ermittlung des Beladungszustandes B1,2 der Staufächer 6 mittels des Überwachungssystems 9, wie dies in Figur 1, beschrieben wurde.

In einem ersten Schritt S1 wird ein hörbarer Anregungsschalls A erzeugt und über die Anregungseinrichtung 14 in den Stauraum 7 eingespeist. Im Stauraum 7 ergibt sich dadurch ein akustisches Signal S, das vom aktuellen Resonanzverhalten R1,2 des Stauraums 7 abhängt. Der Anregungsschalls A wird optional manuell, hier jedoch in einem gewissen zeitlichen Abstand mehrmalig durch die Anregungseinrichtung 14 als ein Ton wiedergegeben. Alternativ kann das akustische Signal S jedoch auch beim Schließen des Staufachs 6 durch ein Schließgeräusch erzeugt werden.

In einem zweiten Schritt S2 wird das akustische Signal S innerhalb des Stauraums 7 durch die Sensoreinrichtung 10 bzw. den akustischen Sensor 12 aufgenommen und mit diesem korrelierte Sensordaten D an die Auswerteeinrichtung 11 übermittelt.

In einem dritten Schritt S3 werden die durch die Sensoreinrichtung 10 übermittelten Sensordaten durch die Auswerteeinrichtung 11 ausgewertet. Dabei wird auf Basis der Sensordaten D das aktuelle Resonanzverhalten R1,2 des Staufaches 6 ermittelt. Auf dieser Basis wird dann ein aktueller Beladungszustand B1,2 des zugehörigen Staufachs 6 ermittelt. Insbesondere kann auf Basis des Resonanzverhaltens R1,2 ein verfügbares Stauraumvolumen und/oder Objekte 8 in dem Stauraum 7 ermittelt werden. Beispielsweise kann basierend auf einer Frequenz-, Phasen und/oder Amplitudenänderung in einer Übertragungsfunktion bzw. einem Frequenzgang des akustischen Signals S eine Beschaffenheit der in dem Stauraum 7 angeordneten Objekte 8 ermittelt. Somit kann bei Ermittlung des Beladungszustandes B1,2 beispielsweise zwischen weichen und harten Objekten 8 unterschieden werden. Dies ist möglich, da harte Objekte den Anregungsschall A reflektieren und weiche Objekte den Anregungsschall A dämpfen.

In einem vierten Schritt S4 wird der ermittelte aktuelle Beladungszustand B1,2 durch die Anzeigeeinrichtung 15 angezeigt.

Figur 3 zeigt das Staufach 6 aus Figur 2 im seitlichen Querschnitt. In Fig. 3a) ist das Staufach zunächst bekanntermaßen leer, keine Objekte 8 befinden sich im Inneren. Das Überwachungssystem 9 verfügt vorliegend über zwei akustische Sensoren 12 in Form von Mikrofonen, welche wiederum die nicht näher bezeichnete Gehäusewand des Staufaches 6 durchdringen, teilweise in den Stauraum 7 hineinragen und in diesen gerichtet sind, um das akustische Signal S im Stauraum 7 zu erfassen. Die akustischen Sensoren 12 liefern die entsprechenden Sensordaten D an die Auswerteeinrichtung 11. Die Auswerteeinrichtung 11 ist hier mit einer Anzeigeeinrichtung 15 verbunden. Diese ist hier ausgeführt in Form einer hier nur stilisiert dargestellten Anzeige mit zwei Leuchten (durch Kreise angedeutet), welche grün (in der Figur links) und rot (in der Figur rechts) leuchten können. Die Anregungseinrichtung 14 ist hier ein akustischer Signalgeber in Form eines Lautsprechers.

In einem ersten Verfahrensschritt gemäß Figur 3a) erfolgt die Messung einer Referenz-Übertragungsfunktion 20a im leeren Zustand des Staufaches 6, hier vor dem Boarding von Passagieren. Die Anzeigeeinrichtung 15 bzw. Anzeige leuchtet grün (durch ein Kreuz symbolisiert). Die Übertragungsfunktion 20a stellt das aktuelle Resonanzverhalten R1 des leeren Stauraumes 7 dar. Die Übertragungsfunktion 20a enthält in hier nur symbolisch dargestellter Weise einen Amplituden- sowie einen Phasengang über einem hörbaren bzw. Audio-Frequenzbereich. Die Übertragungsfunktion 20a wird durch ein akustisches Anregungssignal in Form des Anregungsschalls A und der an den Mikrofonen bzw. Sensoren 12 gemessene Antwort gebildet. Diese liegt in Form des sich im Stauraum 7 ergebenden akustischen Signals S bzw. den hieraus vom akustischen Sensor 12 erzeugten Sensordaten D vor. Dabei sind mehrere stark ausgeprägte Eigenfrequenzen sichtbar (hier nur symbolisch angedeutet). Das Staufach 6 befindet sich bei dieser Messung in der Schließstellung G.

In einem weiteren Schritt zwischen den Figuren 3a) und 3b) wird das Staufach 6 in der Offenstellung O mit Gepäck in Form von hier vier Objekten 8 (gestrichelt dargestellt) beladen. Diese sind unterschiedlich große Trolleys (als Rechtecke angedeutet) sowie eine Jacke (als unregelmäßige Form angedeutet).

In einem nächsten Schritt wird das Staufach 6 (auch "Gepäckfach") nach dem Beladen mit den Objekten 8 geschlossen, also in die Schließstellung G gebracht. Hierbei erfolgt eine nicht näher erläuterte sensorische Detektion des Schließvorganges.

In einem weiteren Schritt gemäß Figur 3b) erfolgt dann eine erneute Messung der Übertragungsfunktion 20b. Da sich das Resonanzverhalten R2 des Stauraumes 7 aufgrund der Anwesenheit der Objekte 8 nunmehr vom ursprünglichen Resonanzverhalten R1 unterscheidet, ergibt sich eine von der Übertragungsfunktion 20a verschiedene Übertragungsfunktion 20b, die nunmehr das Resonanzverhalten R2 repräsentiert bzw. diesem entspricht.

In einem weiteren Schritt gemäß Figur 3c) erfolgt ein durch einen Doppelpfeil symbolisierter Vergleich der Übertragungsfunktionen 20a und 20b. Die zwei Übertragungsfunktionen 20a und 20b werden also verglichen bzw. einer gegebenenfalls sehr aufwendigen datentechnischen Analyse unterzogen. Je nach Veränderung der Frequenz, Amplitude und/oder Phase (vor allem innerhalb der Eigenfrequenzen) in bzw. zwischen den Übertragungsfunktionen 20a,b wird aus dem aktuellen Resonanzverhalten R2, hier in Bezug auf das Resonanzverhalten R1, auf den aktuellen Beladungszustand B2 geschlossen. Der Beladungszustand B2 wird hier als "voll" bewertet. Es ändert sich also das Amplituden- und/oder Frequenz- und/oder Phasenverhalten des Resonanzverhaltens R1,2 in Form der Übertragungsfunktion 20a,b.

Mit anderen Worten wird also ein Vergleich der Übertragungsfunktionen 20a (Referenzübertragungsfunktion "Leer") und 20b (aktuelle Übertragungsfunktion "voll") durchgeführt.

Das Resonanzverhalten R1 in Form der Übertragungsfunktion 20a stellt also ein bekanntes Resonanzverhalten R1 bei bekanntem Beladungszustand B1 ("leer") des Stauraumes 7 dar. Der später aktuelle Beladungszustand B2 wird dann basierend auf einer Änderung des Resonanzverhaltens R2 gegenüber R1 ausgehend dem bekannten Resonanzverhaltens R1 ermittelt.

In einem letzten Schritt erfolgt die Anzeige des Beladungszustandes B2 oder Füllstands durch die Anzeigeeinrichtung 15 bzw. das in der Figur 3b) rechte, rote Anzeigeelement, welches nunmehr anstelle des grünen Anzeigeelements aufleuchtet. Entsprechend des detektierten Füllstands bzw. Beladungszustandes B2 wird also von der Auswerteeinrichtung 1 ein Ausgangssignal an das Anzeigeelement bzw. die Anzeigeeinrichtung 14 übermittelt

Bei einem erneuten Öffnen des Staufaches 6, also Verlassen der Schließstellung G und anschließend erneutem Erreichen der Schließstellung G wird das obige Verfahren sinngemäß wiederholt und eine erneute Übertragungsfunktion 20b gemäß dem sich dann einstellenden Resonanzverhalten R2 ermittelt und auf den wiederum aktuellen Beladungszustand B2 geschlossen und sodann die Anzeigeeinrichtung 14 entsprechend angesteuert ("rot" = "voll" oder "grün" = "leer").

Bei einer Beladung des Stauraumes 7 ändern sich die Frequenz, Amplitude und/oder Phase der Übertragungsfunktion 20a,b. Es verändern sich die Resonanzfrequenzen in ihrer Frequenz, Amplitude und/oder Phase. Anhand der Frequenz- und Amplituden-Information kann unmittelbar auf das Volumen (freies Volumen des Stauraums 7) geschlossen werden. Aus der Amplituden- und Phaseninformation kann auf die Dämpfung innerhalb des Staufachvolumens bzw. Stauraumes 7 geschlossen werden. Die Unterscheidung zwischen weichen (Kleidung) und harten Objekten 8 (Trolleys) ist prinzipiell auf Basis der Phaseninformation möglich.

In einer nicht dargestellten Variante wird als Belegungszustand B2 also die Information: "Drei harte Objekte (Trolleys) und ein weiches Objekt (Kleidung) im Staufach" ermittelt.

### Bezugszeichenliste

- 1: Flugzeug
- 2: Innenraum
- 3: Sitzplätze
- 4: Sitzreihe
- 5: Staufachanordnung
- 6: Staufach
- 7: Stauraum
- 8: Objekt
- 9: Überwachungssystem
- 10: Sensoreinrichtung
- 11: Auswerteeinrichtung
- 12: akustischer Sensor
- 13: KI-Modul
- 14: Anregungseinrichtung
- 15: Anzeigeeinrichtung
- 20a,b: Übertragungsfunktion

- O: Offenstellung
- G: Schließstellung
- S1-S4: Verfahrensschritte
- B1,2: Beladungszustand
- R1,2: Resonanzverhalten
- D: Sensordaten
- S: akustisches Signal
- A: Anregungsschall

## Patentansprüche

1. Staufachanordnung (5) für ein Flugzeug (1),
mit mindestens einem Staufach (6), wobei das Staufach (6) einen Stauraum (7) zur Aufnahme von Objekten (8) aufweist, wobei der Stauraum (7) in einer Schließstellung (G) des Staufachs (6) geschlossen ist und in einer Offenstellung (O) des Staufachs (6) von außen zugänglich ist,
wobei das Staufach (6) zumindest in der Schließstellung (G) ein von einem Beladungszustand (B1,2) mit Objekten (8) abhängiges akustisches Resonanzverhalten (R1,2) aufweist,
mit einem Überwachungssystem (9), das zur Ermittlung des aktuellen Beladungszustandes (B1,2) des Stauraums (7) eingerichtet ist, wobei das Überwachungssystem (9) eine Sensoreinrichtung (10) und eine Auswerteeinrichtung (11) aufweist, die zur Auswertung von Sensordaten (D) eingerichtet ist, die von der Sensoreinrichtung (10) an die Auswerteeinrichtung (11) geliefert sind,
**dadurch gekennzeichnet, dass**
die Sensoreinrichtung (10) mindestens einen akustischen Sensor (12) zur Erfassung eines akustischen Signals (S) innerhalb des Stauraums (7) aufweist und dazu eingerichtet ist, die mit dem erfassten akustischen Signal (S) korrelierten Sensordaten (D) an die Auswerteeinrichtung (11) auszugeben, und wobei die Auswerteeinrichtung (11) dazu eingerichtet ist, anhand der empfangenden Sensordaten (D) das aktuelle Resonanzverhalten (R1,2) des Staufachs (6) zu ermitteln, und den Beladungszustand (B1,2) des Stauraumes (7) mit Objekten (8) auf Basis des ermittelten Resonanzverhaltens (R1,2) zu ermitteln.

2. Staufachanordnung (5) nach Anspruch 1, **dadurch gekennzeichnet, dass** die Auswerteeinrichtung (11) ausgebildet ist, auf Basis des aktuellen Resonanzverhaltens (R1,2) ein verfügbares Stauraumvolumen des Stauraums (7) zu ermitteln und/oder in dem Stauraum (7) angeordnete Objekte (8) zu ermitteln.

3. Staufachanordnung (5) nach Anspruch 1 oder 2, **dadurch gekennzeichnet, dass** wenigstens einer der akustischen Sensoren (12) als ein Mikrofon ausgebildet ist, wobei das Mikrofon zumindest teilweise in dem Stauraum (7) angeordnet und/oder in den Stauraum (7) gerichtet ist.

4. Staufachanordnung (5) nach Anspruch 3, **dadurch gekennzeichnet, dass** die Sensoreinrichtung (10) mehrere der als Mikrofone ausgebildeten akustischen Sensoren (12) zur Erfassung des akustischen Signals (S) an mehreren Orten des Stauraums (7) aufweist.

5. Staufachanordnung (5) nach einem der vorhergehenden Ansprüche, **dadurch gekennzeichnet, dass** diese dazu eingerichtet ist, zumindest einen Teil des akustischen Signals (S) als Ergebnis einer Einstrahlung von Umgebungsschall in den Stauraum (7) aufzunehmen.

6. Staufachanordnung (5) nach einem der vorhergehenden Ansprüche, **gekennzeichnet durch** eine Anregungseinrichtung (14) zur gezielten Einstrahlung eines Anregungsschalls (A) in den Stauraum (7), wobei die Anregungseinrichtung (14) dazu ausgebildet ist, dass der Anregungsschall (A) zumindest einen Teil des akustischen Signals (S) im Stauraum (7) erzeugt.

7. Staufachanordnung (5) nach Anspruch 6, **dadurch gekennzeichnet, dass** die Auswerteeinrichtung (11) zur Ansteuerung der Anregungseinrichtung (14) und/oder zum Empfangen einer Wiedergabeinformation von der Anregungseinrichtung (11) übertragungstechnisch mit der Anregungseinrichtung (14) verbunden ist.

8. Staufachanordnung (5) nach Anspruch 6 oder 7, **dadurch gekennzeichnet, dass** die Anregungseinrichtung (14) ausgebildet ist, zumindest einen Teil des Anregungsschalls (A) im Hörfrequenzbereich in den Stauraum (7) einzustrahlen.

9. Staufachanordnung (5) nach einem der vorhergehenden Ansprüche, **dadurch gekennzeichnet, dass** die Auswerteinrichtung (11) ein KI-Modul (13) aufweist, wobei das KI-Modul (13) ausgebildet ist, die Ermittlung des Beladungszustandes (B1,2) des Stauraums (7) basierend auf den erfassten Sensordaten (D) und/oder dem ermittelten Resonanzverhalten (R1,2) zu erlernen und/oder zu verbessern.

10. Staufachanordnung (5) nach einem der vorhergehenden Ansprüche, **dadurch gekennzeichnet, dass** das Überwachungssystem (9) eine Anzeigeeinrichtung (15) aufweist, wobei die Anzeigeeinrichtung (15) ausgebildet ist, den aktuellen Beladungszustand (B1,2) des Staufachs (6) anzuzeigen.

11. Flugzeug (1) mit der Staufachanordnung (9) nach einem der vorhergehenden Ansprüche.

12. Verfahren zur Ermittlung eines Beladungszustandes (B1,2) eines Stauraumes (7) einer Staufachanordnung (5) nach einem der Ansprüche 1 bis 10, bei dem:
- das akustische Signal (S) in dem Stauraum (7) erfasst wird und die mit diesem korrelierten Sensordaten (D) an die Auswerteeinrichtung (11) übermittelt werden;
- das aktuelle Resonanzverhalten (R1,2) anhand der Sensordaten (D) ermittelt wird;
- der Beladungszustand (B1,2) auf Basis des ermittelten Resonanzverhaltens (R1,2) ermittelt wird.

13. Verfahren nach Anspruch 12, **dadurch gekennzeichnet, dass** der Beladungszustand (B1,2) basierend auf einer Änderung des Resonanzverhaltens (R1,2) ausgehend von einem Stauraum (7) mit bekanntem Resonanzverhalten (R1,2) bei bekanntem Beladungszustand (B1,2) ermittelt wird.

14. Verfahren nach Anspruch 13, **dadurch gekennzeichnet, dass** das anhand einer Änderung im Amplituden- und/oder Frequenz- und/oder Phasenverhalten des Resonanzverhaltens (R1,2) ermittelt wird, ob massive oder weiche Objekte (8) in dem Stauraum (7) vorhanden sind.

15. Verfahren nach Anspruch 14, **dadurch gekennzeichnet, dass** bei der Ermittlung des Beladungszustandes (B1,2) zwischen einer Anordnung von massiven Objekten und weichen Objekten in dem Stauraum (7) unterschieden wird.

## Claims

1. Storage compartment arrangement (5) for an aircraft (1),
having at least one storage compartment (6), the storage compartment (6) comprising a storage space (7) for receiving objects (8), the storage space (7) being closed in a closed position (G) of the storage compartment (6) and being accessible from outside in an open position (O) of the storage compartment (6), wherein, at least in the closed position (G), the storage compartment (6) has an acoustic resonance behaviour (R1,2) that is dependent on a load state (B1,2) with objects (8),
having a monitoring system (9) that is configured to ascertain the present load state (B1,2) of the storage space (7), the monitoring system (9) comprising a sensor device (10) and an evaluation device (11) that is configured to evaluate sensor data (D) delivered to the evaluation device (11) by the sensor device (10),
**characterized in that**
the sensor device (10) comprises at least one acoustic sensor (12) for picking up an audible signal (S) within the storage space (7) and is configured to output the sensor data (D) correlated with the picked-up audible signal (S) to the evaluation device (11), and wherein the evaluation device (11) is configured to use the received sensor data (D) to ascertain the present resonance behaviour (R1,2) of the storage compartment (6), and to ascertain the load state (B1,2) of the storage space (7) with objects (8) on the basis of the ascertained resonance behaviour (R1,2).

2. Storage compartment arrangement (5) according to Claim 1, **characterized in that** the evaluation device (11) is designed to take the present resonance behaviour (R1,2) as a basis for ascertaining an available storage space volume of the storage space (7) and/or ascertaining objects (8) arranged in the storage space (7).

3. Storage compartment arrangement (5) according to Claim 1 or 2, **characterized in that** at least one of the acoustic sensors (12) is in the form of a microphone, at least part of the microphone being arranged in the storage space (7) and/or being aimed into the storage space (7).

4. Storage compartment arrangement (5) according to Claim 3, **characterized in that** the sensor device (10) comprises multiple instances of the acoustic sensors (12) in the form of microphones for picking up the audible signal (S) at multiple locations in the storage space (7).

5. Storage compartment arrangement (5) according to one of the preceding claims, **characterized in that** it is configured to receive at least a portion of the audible signal (S) as the result of ambient sound being radiated into the storage space (7).

6. Storage compartment arrangement (5) according to one of the preceding claims, **characterized by** an excitation device (14) for radiating excitation sound (A) into the storage space (7) in a targeted manner, the excitation device (14) being designed so that the excitation sound (A) generates at least a portion of the audible signal (S) in the storage space (7).

7. Storage compartment arrangement (5) according to Claim 6, **characterized in that** the evaluation device (11) is connected to the excitation device (14) in order to actuate the excitation device (14) and/or to receive reproduction information from the excitation device (11) by way of transmission.

8. Storage compartment arrangement (5) according to Claim 6 or 7, **characterized in that** the excitation device (14) is designed to radiate at least a portion of the excitation sound (A) into the storage space (7) in the audible frequency range.

9. Storage compartment arrangement (5) according to one of the preceding claims, **characterized in that** the evaluation device (11) comprises an AI module (13), the AI module (13) being designed to learn and/or improve the ascertainment of the load state (B1,2) of the storage space (7) on the basis of the captured sensor data (D) and/or the ascertained resonance behaviour (R1,2).

10. Storage compartment arrangement (5) according to one of the preceding claims, **characterized in that** the monitoring system (9) comprises a display device (15), the display device (15) being designed to display the present load state (B1,2) of the storage compartment (6) .

11. Aircraft (1) having the storage compartment arrangement (9) according to one of the preceding claims.

12. Method for ascertaining a load state (B1,2) of a storage space (7) of a storage compartment arrangement (5) according to one of Claims 1 to 10, in which:
- the audible signal (S) is picked up in the storage space (7) and the sensor data (D) correlated therewith are transferred to the evaluation device (11);
- the present resonance behaviour (R1,2) is ascertained on the basis of the sensor data (D);
- the load state (B1,2) is ascertained on the basis of the ascertained resonance behaviour (R1,2).

13. Method according to Claim 12, **characterized in that** the load state (B1,2) is ascertained on the basis of a change in the resonance behaviour (R1,2), based on a storage space (7) with known resonance behaviour (R1,2) for a known load state (B1,2).

14. Method according to Claim 13, **characterized in that** a change in the amplitude response and/or frequency response and/or phase response of the resonance behaviour (R1,2) is used to ascertain whether solid or soft objects (8) are present in the storage space (7).

15. Method according to Claim 14, **characterized in that** the ascertainment of the load state (B1,2) involves distinguishing between an arrangement of solid objects and soft objects in the storage space (7).

## Revendications

1. Arrangement de compartiment de rangement (5) pour un aéronef (1),
comprenant au moins un compartiment de rangement (6), le compartiment de rangement (6) possédant un espace de rangement (7) destiné à recevoir des objets (8), l'espace de rangement (7) étant fermé dans une position fermée (G) du compartiment de rangement (6) et étant accessible depuis l'extérieur dans une position ouverte (O) du compartiment de rangement (6),
le compartiment de rangement (6) présentant un comportement de résonance acoustique (R1,2) qui dépend, au moins dans la position fermée (G), d'un état de chargement (B1,2) avec des objets (8),
comprenant un système de surveillance (9), qui est conçu pour déterminer l'état de chargement (B1,2) actuel de l'espace de rangement (7), le système de surveillance (9) possédant un dispositif de détection (10) et un dispositif d'interprétation (11), qui est conçu pour l'interprétation de données de capteur (D) qui sont délivrées au dispositif d'interprétation (11) par le dispositif de détection (10),
**caractérisé en ce que**
le dispositif de détection (10) possède au moins un capteur acoustique (12) destiné à capter un signal acoustique (S) à l'intérieur de l'espace de rangement (7) et il est conçu pour délivrer au dispositif d'interprétation (11) les données de capteur (D) corrélées avec le signal acoustique (S) capté, et le dispositif d'interprétation (11) étant conçu pour déterminer le comportement de résonance (R1,2) actuel de l'espace de rangement (6) à l'aide des données de capteur (D) reçues, et pour déterminer l'état de chargement (B1,2) de l'espace de rangement (7) avec des objets (8) sur la base du comportement de résonance (R1,2) déterminé.

2. Arrangement de compartiment de rangement (5) selon la revendication 1, **caractérisé en ce que** le dispositif d'interprétation (11) est configuré pour, sur la base du comportement de résonance (R1,2) actuel, déterminer un volume d'espace de rangement disponible de l'espace de rangement (7) et/ou déterminer les objets (8) disposés dans l'espace de rangement (7).

3. Arrangement de compartiment de rangement (5) selon la revendication 1 ou 2, **caractérisé en ce qu'**au moins l'un des capteurs acoustiques (12) est réalisé sous la forme d'un microphone, le microphone étant au moins partiellement disposé dans l'espace de rangement (7) et/ou orienté dans l'espace de rangement (7).

4. Arrangement de compartiment de rangement (5) selon la revendication 3, **caractérisé en ce que** le dispositif de détection (10) possède plusieurs de ce capteur acoustique (12) réalisé sous la forme d'un microphone pour la détection du signal acoustique (S) en plusieurs endroits de l'espace de rangement (7).

5. Arrangement de compartiment de rangement (5) selon l'une des revendications précédentes, **caractérisé en ce que** celui-ci est conçu pour enregistrer au moins une partie du signal acoustique (S) en tant que résultat d'une irradiation de bruit ambiant dans l'espace de rangement (7).

6. Arrangement de compartiment de rangement (5) selon l'une des revendications précédentes, **caractérisé par** un dispositif d'excitation (14) destiné à l'irradiation d'un bruit d'excitation (A) dans l'espace de rangement (7), le dispositif d'excitation (14) étant configuré pour que le bruit d'excitation (A) génère au moins une partie du signal acoustique (S) dans l'espace de rangement (7).

7. Arrangement de compartiment de rangement (5) selon la revendication 6, **caractérisé en ce que** le dispositif d'interprétation (11), en vue de commander le dispositif d'excitation (14) et/ou en vue de recevoir une information de reproduction du dispositif d'interprétation (11), est relié par technique de transmission au dispositif d'excitation (14).

8. Arrangement de compartiment de rangement (5) selon la revendication 6 ou 7, **caractérisé en ce que** le dispositif d'excitation (14) est configuré pour irradier au moins une partie du bruit d'excitation (A) dans la plage des hautes fréquences dans l'espace de rangement (7) .

9. Arrangement de compartiment de rangement (5) selon l'une des revendications précédentes, **caractérisé en ce que** le dispositif d'interprétation (11) possède un module d'IA (13), le module d'IA (13) étant configuré pour apprendre et/ou améliorer la détermination de l'état de chargement (B1,2) de l'espace de rangement (7) en se basant sur les données de capteur (D) captées et/ou le comportement de résonance (R1,2) déterminé.

10. Arrangement de compartiment de rangement (5) selon l'une des revendications précédentes, **caractérisé en ce que** le système de surveillance (9) possède un dispositif d'affichage (15), le dispositif d'affichage (15) étant configuré pour afficher l'état de chargement (B1,2) actuel du compartiment de rangement (6).

11. Aéronef (1) comprenant l'arrangement de compartiment de rangement (9) selon l'une des revendications précédentes.

12. Procédé de détermination de l'état de chargement (B1,2) d'un espace de rangement (7) d'un arrangement de compartiment de rangement (5) selon l'une des revendications 1 à 10, avec lequel :
- le signal acoustique (S) dans l'espace de rangement (7) est capté et les données de capteur (D) corrélées avec celui-ci sont communiquées au dispositif d'interprétation (11) ;
- le comportement de résonance (R1,2) actuel est déterminé à l'aide des données de capteur (D) ;
- l'état de chargement (B1,2) est déterminé sur la base du comportement de résonance (R1,2) déterminé.

13. Procédé selon la revendication 12, **caractérisé en ce que** l'état de chargement (B1,2) est déterminé sur la base d'une modification du comportement de résonance (R1,2) émanant d'un espace de rangement (7) ayant un comportement de résonance (R1,2) connu avec état de chargement (B1,2) connu.

14. Procédé selon la revendication 13, **caractérisé en ce que** la présence d'objets (8) massifs ou mous dans l'espace de rangement (7) est déterminée à l'aide d'une modification du comportement en amplitude et/ou en fréquence et/ou en phase du comportement de résonance (R1,2).

15. Procédé selon la revendication 14, **caractérisé en ce que** lors de la détermination de l'état de chargement (B1,2), la différence est faite entre un arrangement d'objets massifs et d'objets mous dans l'espace de rangement (7).
